# EUROPEAN PATENT APPLICATION

(11) **EP 1 630 694 A2**
(43) Date of publication of application: **01.03.2006**
(21) Application number: 05014852.7
(22) Date of filing: 08.07.2005
(51) Int. Cl.: G06F 17/30

(54) **System and method to associate content types in a portable communication device**

(30) Priority: 23.08.2004 US 924382
(71) Applicant: Microsoft Corporation, Redmond WA 98052 (US)
(72) Inventor: Shah, Mehul, Redmond WA 98052 (US); Chen, Gang, Redmond WA 98052 (US)
(74) Representative: Goddar, Heinz J.

(57) **Abstract**

A system and or/methodology that facilitates organizing content on a portable communications device to generate a compilation *(e*.*g*., presentation) containing the organized content. The system and/or methodology includes an authoring component that associates content of a first type with a subset of other content and a sharing component that communicates and distributes the associated content. The subject invention can include a visual content input component that receives visual content and another content input component that can generate and organize other content in accordance with a user preference. The other content can include any content type known in the art including, but not limited to, visual, audible, text or the like.

## Description

### TECHNICAL FIELD

This application relates generally to computer systems, and more specifically to a system and/or methodology that employs a portable device to associate a subset of one type of content (*e.g.*, visual) with a subset of another type of content (*e.g.*, audio, text) thereby generating a story-like presentation which can be shared in a variety of techniques.

### BACKGROUND OF THE INVENTION

With the technological advances in hand-held and portable communication devices, there is an ongoing and increasing need to maximize the benefit of these continually emerging technologies. Specifically, there is a need to increase the flexibility and performance of video, image capture and voice recording technologies as related to personal communication devices and networks. In other words, there is a need to develop systems and/or methodologies to leverage technological advances related to video and audio (e.g., video capture devices, cameras, microphones) employed in handheld devices.

Today, cellular phones running on state-of-the-art operating systems have increased computing power in hardware and increased features in software in relation to earlier technologies. By way of example, cellular phones are sometimes equipped with built-in digital cameras and microphones together with computing functionalities of personal digital assistants (PDAs). Since these devices combine the functionality of cellular phones with the functionality of PDAs, they are commonly referred to as "smart-phones." The hardware and software features available in these smart-phones and similar technologically capable devices provide developers the capability and flexibility to build applications through a versatile platform. The increasing market penetration of cell-phones and other portable devices (*e*.*g*., PDAs) inspires programmers to build applications, games, ring-tones, *etc*. for these smart-phones.

Many smart-phones have built-in digital still cameras capable of generating video graphics array (VGA) quality pictures having 640x480 pixel resolution. Several higher-end smart-phones, especially those developed in the European and Asian markets, are capable of taking pictures of 1 Mega-pixel resolution and higher. In addition to these photographic capabilities, smart-phones available in the market today have built-in microphone hardware, the ability to record voice narration and the ability to record short video clips.

Although earlier systems permit a user to electronically transfer single image files *via* hand-held devices, there is still a substantial unmet need for a system and/or methodology that enables users to combine visual images and short video clips into a presentation or slideshow, add voice narration and/or text to describe the images, add background music and pan/zoom effects to the images to create a video "story." Additionally, there is an unmet need to enable the transfer of the resulting story in the form of a video or a slideshow presentation to friends and family *via* email, Internet website or the creation of a digital video disc (DVD) or video compact disc (VCD) of the story.

### SUMMARY OF THE INVENTION

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to the more detailed description that is presented later.

Today's portable devices, particularly communication devices such as "smart-phones" can include built-in digital cameras and PDA-like functionality thereby having increased computing power. Accordingly, they provide developers with versatile platforms on which to build components, modules and applications. The subject invention extends photo slideshow animation and annotation components, modules and applications for use with handheld devices (e.g., smart-phones and other intelligent audio and image ready mobile devices). More particularly, one aspect of the subject invention integrates an authoring component running on a smart-phone with a sharing component that can be co-located or remotely located on a variety of platforms, including smart-phone, PC and server or combination thereof.

The authoring application can allow a user to generate pictures and short video clips, add voice narration, add text annotations and create an association between these items. The sharing application can enable a range of possible user scenarios, including Phone-to-Connected PC, Phone-to-Email-to-PC, Phone-to-BLOG (e.g., web-log) and Phone-to-Email-to-BLOG. In email blogging scenarios, for example, a receiving component on a server can automatically detect receipt of an email generated by the authoring application, read information from the associated data file(s) and automatically add an entry into the appropriate BLOG. Similarly, a plug-in associated with an email component of a PC can enable a series of possible methods for automatically generating presentations (e.g., slideshows).

The subject invention disclosed and claimed herein, in another aspect thereof, includes a system and or/methodology that facilitates organizing media on a portable communications device. The system and/or method includes a visual content input component that receives visual content and an authoring component that associates other content with a subset of the visual content. The other content can include any content known in the art including, but not limited to, visual, audible, text or the like.

One aspect of the subject invention is directed to a system wherein the portable communications device is a cellular telephone that includes a camera that generates visual content, an audio input component (e.g., microphone) that generates audio content and/or a text input component (*e*.*g*., keyboard) that generates text content. Accordingly, these various types of content can be combined and/or organized to generate a desired compilation (e.g., presentation, slideshow, video). It will be appreciated that these input components (e.g., camera, microphone, keyboard, etc.) can be components external and/or remote from the portable communications device.

In another aspect of the subject invention, a system is provided that includes a binding component that provides for concurrently receiving the visual content and other content and automatically generating a compilation. In this aspect, the binding component can be employed to bind (*e.g.*, join, combine) associated files to generate a story. Moreover, the system can include a display component that facilitates presentation of the compilation.

Yet another aspect of the invention provides for a system having a sharing component that facilitates distribution of the associated content or compilation. In accordance with alternate aspects, the associated content can be shared or distributed in any manner. By way of example, the associated content can be transmitted *via* wired or wireless connection to a PC for additional viewing and/or editing. Alternatively, the associated content can be transmitted to an email component and/or web log (BLOG) *via* any communications network as desired. For instance, an email system can be employed that receives the associated subset of visual content and the other content and generates a compilation (*e.g.*, slideshow, annotated video, story) of the received content.

Still in another aspect, a system is provided which employs a collaboration component that combines the associated subset of visual content of one handheld device with a second associated subset of visual content of a second handheld device. Those skilled in the art will appreciate that the collaboration component can incorporate content from any number and/or combination of devices. Additionally, it will be understood that collaboration can occur irrespective of device type. In other words, in an exemplary aspect, it is contemplated that content from one type of device *(e.g.,* smart-phone) can be collaborated with the content from a different type of device (e.g., PDA).

To the accomplishment of the foregoing and related ends, certain illustrative aspects of the invention are described herein in connection with the following description and the annexed drawings. These aspects are indicative, however, of but a few of the various ways in which the principles of the invention can be employed and the subject invention is intended to include all such aspects and their equivalents. Other advantages and novel features of the invention will become apparent from the following detailed description of the invention when considered in conjunction with the drawings.

### BRIEF DESCRIPTION OF THE DRAWINGS

FIG. 1 illustrates a general component block diagram of system for authoring and sharing a presentation including visual and other content in accordance with an aspect of the invention.

FIG. 2 illustrates an exemplary flow chart of procedures to generate, combine and share content in accordance with an aspect of the disclosed invention.

FIG. 3 illustrates a network architectural diagram that illustrates representative network components including content association and binding components in accordance with a disclosed aspect.

FIG. 4 illustrates a network architectural diagram that illustrates representative network components including input components and corresponding content in accordance with a disclosed aspect.

FIG. 5 illustrates an exemplary user interface (UI) that illustrates a thumbnail image selection screen in accordance with a disclosed aspect.

FIG. 6 illustrates an exemplary UI that illustrates a list image selection screen in accordance with a disclosed aspect.

FIG. 7 illustrates an exemplary UI that illustrates an audio input mechanism in relation to a selected image in accordance with a disclosed aspect.

FIG. 8 illustrates an exemplary UI that illustrates an audio timing feature in accordance with a disclosed aspect.

FIG. 9 illustrates an exemplary architectural diagram for sharing associated content *via* a personal computer (PC) in accordance with a disclosed aspect.

FIG. 10 illustrates an exemplary architectural diagram for sharing associated content *via* an email component and/or plug-in in accordance with a disclosed aspect.

FIG. 11 illustrates an exemplary architectural diagram for sharing associated content *via* remote server in connection with a web-log (BLOG) in accordance with a disclosed aspect.

FIG. 12 illustrates an exemplary architectural diagram for sharing associated content *via* email in connection with a BLOG in accordance with a disclosed aspect.

FIG. 13 illustrates a flow chart of procedures to share content in accordance with various aspects of the disclosed invention.

FIG. 14 illustrates a portable device operable to execute an aspect of the disclosed invention.

FIG. 15 illustrates a system block diagram of a computer operable to execute the disclosed embodiment.

FIG. 16 illustrates a schematic block diagram of an exemplary computing environment in accordance with the subject invention.

### DETAILED DESCRIPTION OF THE INVENTION

The subject invention is now described with reference to the drawings, wherein like reference numerals are used to refer to like elements throughout. In the following description, for purposes of explanation, numerous specific details are set forth in order to provide a thorough understanding of the subject invention. It may be evident, however, that the subject invention can be practiced without these specific details. In other instances, well-known structures and devices are shown in block diagram form in order to facilitate describing the subject invention.

As used in this application, the terms "component," "system" and "module" are intended to refer to a computer-related entity, either hardware, a combination of hardware and software, software, or software in execution. For example, a component can be, but is not limited to being, a process running on a processor, a processor, an object, an executable, a thread of execution, a program, and/or a computer. By way of illustration, both an application running on a server and the server can be a component. One or more components can reside within a process and/or thread of execution, and a component can be localized on one computer and/or distributed between two or more computers.

As used herein, the term to "infer" or "inference" refer generally to the process of reasoning about or inferring states of the system, environment, and/or user from a set of observations as captured *via* events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

Today's handheld and portable communications devices (e.g., smart-phones) can employ built-in digital cameras and PDA functionality which increase hardware computing power and provide developers with new and versatile platforms on which to build applications. Accordingly, aspects of the subject invention can extend video slide show animation and annotation applications for use with these smart-phones and other intelligent audio and image ready mobile devices. Further, systems and methods of combining any variation of content types are contemplated and are intended to fall within the scope of the hereto appended claims.

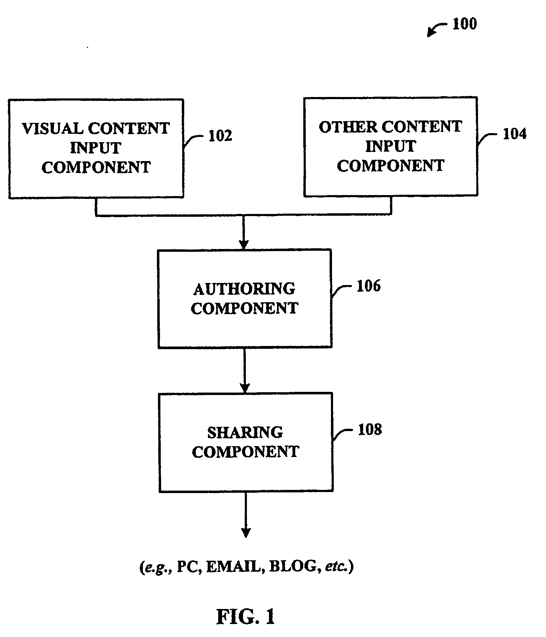

Referring initially to FIG. 1, a general block diagram of system 100 in accordance with an aspect of the subject invention is shown. Generally, the system 100 can be configured to include a visual content input component 102, other content (e.g., audio, text) input component 104, authoring component 106 and sharing component 108. As will be described in greater detail *infra*, the visual content input component 102 and the other content input component 104 can provide a mechanism to input visual and other content into the system 100 for organization by the authoring component 106. Once organized and associated, the sharing component 108 can be employed to effectuate communication and transmission as desired. As will be discussed, in accordance with various aspects, the associated content can be shared in any desired manner including, but not limited to, a PC, email server or application, BLOG or the like as illustrated in FIG. 1.

For ease of understanding, the basic concepts and innovations of FIG. 1 can be better understood with reference to the following exemplary scenarios. In accordance with a first scenario, suppose Travis and his wife are vacationing in Orlando, Florida enjoying early February in a warm climate. They visit several tourist attractions and theme parks. Using the digital camera that is integrated into his smart-phone (*e*.*g*., system 100) and included within the illustrated visual content input component 102, Travis takes several pictures during the visit. Each night during their stay they return to their hotel suite and review pictures taken that day. Using a feature, the authoring component 106, available on their smart-phone, they add voice recording to describe the pictures and their activities during the day. It will be appreciated that the illustrated other content input component 104 can be employed to add additional content including, but not limited to voice narration or text.

Continuing with the example, the authoring component 106 can be employed to associate the pictures (*e*.*g*., visual content) with the narration (*e*.*g*., other content). Using another feature, a sharing component 108, of the same smart-phone device, Travis uploads his pictures and narration to a blogging website. For example, he can upload the pictures and narration to a blogging website provided by his cellular network provider. Minutes later, his parents, and friends at home in Seattle, Washington can access the website for new updates to Travis' BLOG. Doing so, they find a documentary-style "story" of Travis' activities during the day. It will be understood that a "BLOG" can be a personal journal on the Internet or web that one can make available to others for viewing. BLOGs are typically updated daily using specialty applications or components. Typically, postings on a BLOG are arranged in chronological order with the most recent additions featured most prominently.

In a second scenario, assume James' daughter Tiffany is three and thoroughly enjoys singing. She learned a new song from her teacher at day care and sings it again and again after gets home. James uses his portable device (e.g., system 100) equipped with a digital camera to generate several pictures (*e*.*g*., visual content input component 102) of Tiffany singing. Next, he records her singing using a microphone provided with the device. As previously discussed, an other content input component 104 can be provided which includes input mechanisms including, but not limited to a microphone and/or keyboard to generate audio and text content respectively. Once the content types are generated, he employs the authoring component 106 to associate and bind desired content files to create a desired video or story.

After putting Tiffany to bed at night, utilizing the sharing component 108, he connects the device 100 to his computer *via* a Bluetooth™ brand wireless connection. The software on his PC automatically extracts the images and audio files from the device into his PC. Using PC software he corrects red-eye and adjusts brightness in the images. He adds more photos of Tiffany that he had previously saved on his computer and creates a story-like video. Once complete, he uses the sharing component 108 again to upload to an Internet website to share the home videos and photos with his friends and family.

In a third exemplary scenario, Greg works in the Marketing department of a PC hardware company in Seattle, Washington. He plans to attend the annual Consumer Electronics Show in Las Vegas, Nevada to research the latest innovations in PC hardware in order to benchmark competitors. Upon his return, he plans to present these trends to his colleagues back in Seattle. While at the show, he visits booths set up by several companies researching product demonstrations, catalogs and talking to exhibitors.

During his visit, he takes photographs of interesting products and technologies using his smart-phone 100 equipped with a digital camera (*e*.*g*., visual content input component 102). Additionally, using a recording feature (e.g., other content input component 104) of the smart-phone 100, he dictates notes and records what he would otherwise present to his colleagues. Using an authoring component 106 he can associate selected pictures with his voice notes. When he returns to his hotel at night, he employs the sharing component 108 by sending an email including his pictures and voice recordings as email attachments to his colleagues. Additionally, an attachment can be included in the form of an association or index file. His colleagues back in Seattle are running PC applications that also employ a sharing component 108. The sharing component 108 can automatically collect the picture, voice recording and index files from the email attachments and play back the contents in the form of a story video.

As generally discussed, the exemplary scenarios above integrate two novel features of the subject invention - an authoring component 106 and a sharing component 108. Generally, the authoring component 106 can be utilized to associate and bind content files as desired. Subsequently, the sharing component 108 can be employed to communicate the associated and bound content in various manners. Each of these components will be discussed in more detail *infra*.

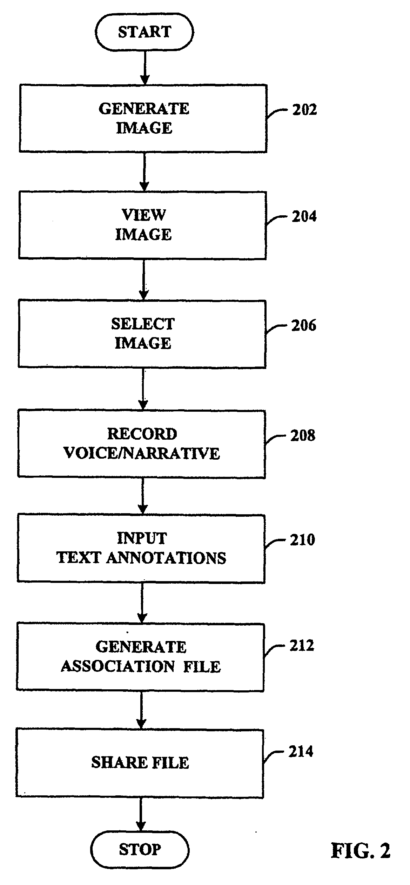

Referring now to FIG. 2, there is illustrated a methodology for generating, authoring and sharing an animated or annotated story in accordance with the subject invention. While, for purposes of simplicity of explanation, the one or more methodologies shown herein, *e.g..* in the form of a flow chart, are shown and described as a series of acts, it is to be understood and appreciated that the subject invention is not limited by the order of acts, as some acts may, in accordance with the subject invention, occur in a different order and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the subject invention.

At 202, an image *(e.g..* visual content) is generated. Next, at 204, the image can be viewed and selected at 206. It will be appreciated that any suitable method for previewing and/or selecting can be employed. By way of example, scrolling through a thumbnail image list is just one exemplary aspect of a suitable preview and/or selection technique. Once selected, voice narration can be recorded at 208 in relation to the selected image. If desired, at 210, text annotations can also be inputted in relation to the selected image. At 212 an association index file can be generated and finally shared at 214. It will be appreciated that alternate aspects of the subject invention can employ an association of still images (e.g., photos) or a motion picture film.

Although the exemplary flowchart of FIG. 2 illustrates the establishment of a single relationship between content type files (e.g., image, voice/narration, text annotation, etc.), it is to be appreciated that the process can be repeated to create subsequent relationships including the same and/or different content files as desired. Additionally, it is to be understood and appreciated that content types can vary from the disclosed aspect of FIG. 2 without departing from the scope and/or functionality of the claimed invention. While the flowchart of FIG. 2 illustrates a selection of an image file and subsequent association of voice/narration and/or text annotations, it is to be appreciated that alternate embodiments are contemplated that reorder the association process whereby any content file can be substituted as the first or subsequent content file(s) in the association process.

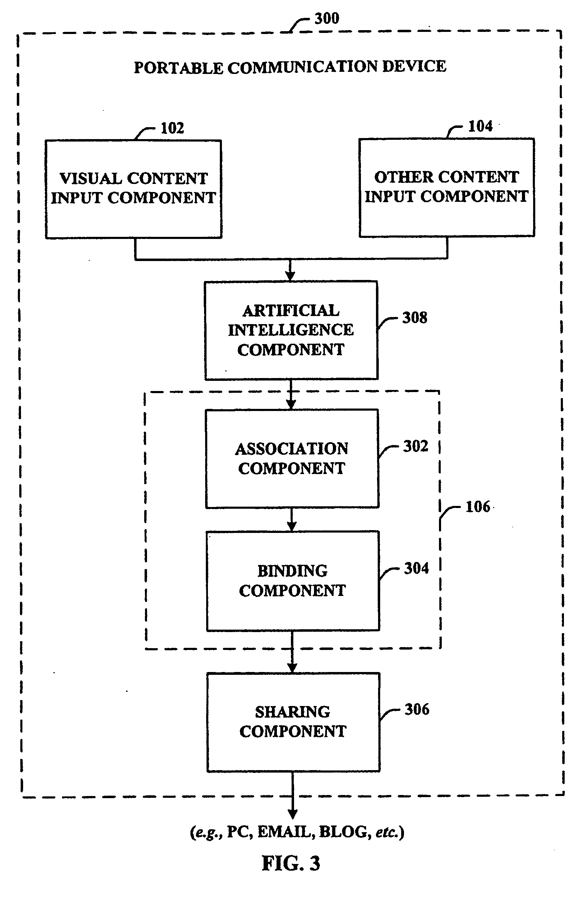

FIG. 3 illustrates a portable communications device 300 in accordance with an aspect of the subject invention. Specifically, FIG. 3 illustrates sub-components of the authoring component 106 (FIG. 1). Accordingly, the sub-components illustrated include an association component 302 and a binding component 304. The association component 302 facilitates a user to initiate compilation of a story as previously discussed. Particularly, the association component 302 can be employed to organize the visual content input component 102 and other content input component 104 to establish a desired relationship. By way of example, the association component 302 can be used to relate a specific visual image to specific audible sounds or narration in accordance with the story. Although the examples discussed employ a one-to-one relationship, it is understood that any suitable relationship can exist in accordance with the subject invention. By way of example, it will be appreciated that a single visual image can be associated to one or more sounds and/or text components as desired.

Next, a binding component 304 can be employed to bind or join the selected associated files together. In other words, the binding component 304 can be used to accomplish the association set forth in the index file generated by the association component 302. In one aspect, the binding component 304 can create a binding file that can be utilized by the sharing component 108 to share (*via* BLOG post, email, *etc*.) the story.

It is to be appreciated that an alternate aspect of the subject invention can be configured that can integrate an association component 302 resident on an intelligent device (*e.g*., portable communications device 300) with a binding component 304 located on a variety of remote platforms (*e*.*g*., personal computer, server). In other words, a user can employ an association component 302 to select pictures or video, add voice narration, add text annotations to create an association between these items. Next, an association file (*e.g*., index file) can be sent together with the content files to be bound at a remote location (*e*.*g*., PC, server).

The sharing component 108 can be employed to communicate the output of the authoring component 106 in a variety of manners. Various sharing scenarios will be discussed *infra* related to sharing the output index file from the association component 302 and/or binding component 304. Although specific aspects or scenarios are discussed herein, those skilled in the art will appreciate that alternate aspects exist and have been contemplated to communicate and formulate the output of the authoring component 106 into a story-like presentation.

In an alternate aspect, as further illustrated by FIG. 3, the subject invention (e.g., in connection with association and/or sharing) can optionally employ various artificial intelligence based schemes for automatically carrying out various aspects thereof. Specifically, an artificial intelligence (AI) component 308 can optionally be provided to implement aspects of the subject invention based upon artificial intelligence processes *(e.g.,* confidence, inference, etc.). For example, a process for determining when to associate and/or bind an image file with an audio file can be facilitated *via* an automatic classifier system and process. Further, the optional AI component 308 can be employed to facilitate an automated process of sharing an associated content presentation or story.

A classifier is a function that maps an input attribute vector, x = (x1, x2, x3, x4, xn), to a confidence that the input belongs to a class, that is, f(x) *= confidence(class).* Such classification can employ a probabilistic and/or statistical-based analysis (e.g., factoring into the analysis utilities and costs) to prognose or infer an action that a user desires to be automatically performed. In the case of file content association, for example, attributes can be file types or other data-specific attributes derived from the file types, and the classes can be categories or areas of interest.

A support vector machine (SVM) is an example of a classifier that can be employed. The SVM operates by finding a hypersurface in the space of possible inputs, which hypersurface attempts to split the triggering criteria from the non-triggering events. Intuitively, this makes the classification correct for testing data that is near, but not identical to training data. Other directed and undirected model classification approaches include, e.g., naive Bayes, Bayesian networks, decision trees, and probabilistic classification models providing different patterns of independence can be employed. Classification as used herein also is inclusive of statistical regression that is utilized to develop models of priority.

By way of example, an optional AI component 308 can be employed to learn a user's preference based upon a pattern of a user's action(s). The optional AI component 308 can, through voice or other recognition techniques, be configured to identify a particular user of a device. Once the user is identified, the AI component 308 can utilize historical pattern and/or preference data corresponding to the user to infer an action (e.g., association and/or sharing). For instance, the optional AI component 308 can infer sharing preferences of a user based upon previous user actions. More particularly, in one example, the optional AI component 308 can be configured to automatically identify, *via* recognition techniques, the subject of a content file (*e*.*g*., image file, voice narration) thereby inferring a subsequent action (*e*.*g*., append narration, append text, share file with particular group, *etc*.) based upon the identity of the user in relation to the subject of the content. It is to be understood that an unlimited number of examples and scenarios exist whereby the optional AI component 308 can be employed to infer and/or automatically perform an action - all of which are contemplated to be included within the scope of the claimed invention.

As will be readily appreciated from the subject specification, the subject invention can employ classifiers that are explicitly trained (*e.g., via* a generic training data) as well as implicitly trained (*e.g.*, *via* observing user behavior, receiving extrinsic information). For example, SVM's can be configured *via* a learning or training phase within a classifier constructor and feature selection module.

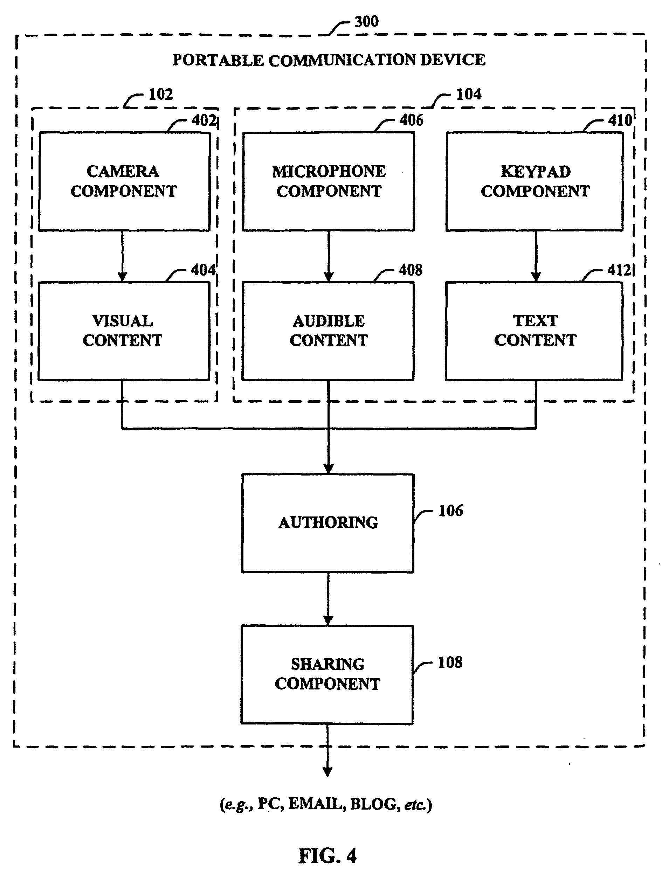

FIG. 4 illustrates exemplary aspects of the visual content input component 102 and other content input component 104 in accordance with the subject invention. As illustrated, visual content input component 102 can include a camera component 402 configured to generate visual content 404. Although the aspects discussed herein are directed to visual content 404 in the form of still images or electronic photographs, it will be appreciated that alternate aspects can include visual content 404 in the form of motion video and/or other visual effects (*e*.*g*., graphics, clip art, *etc*.) as desired.

Other content input component 104 can include a variety of input modules and content types. By way of example, as illustrated in FIG. 4, a microphone component 406 can be employed to generate audible content 408. It will be appreciated that audible content 408 can be any sound including, but not limited to, voice narration, music, or the like. Likewise, a keypad or keyboard component 410 can be employed to generate text content 412. Although the aspects discussed herein are described in connection with various input mechanisms to generate specific content elements, alternative content types (*e.g*., graphics, clip art, *etc*.) can be employed in connection with alternate aspects.

Additionally, it is to be appreciated that other aspects can be employed by directly inputting the desired content or by accessing the desired content *via* internal and/or external sources. By way of example, an alternate aspect of the subject invention can employ an internal data store from which to retrieve desired content. For instance, predefined audio files can be accessed and associated with visual content in lieu of utilizing microphone component 406.

Although the described aspects of the subject invention contemplate combining visual content with other content (*e.g*., audible, text, predefined clip art), it will be appreciated that any combination of content organization can be employed without departing from the scope and functionality of the subject invention. For example, alternate aspects can combine audible and text content to formulate a desired story-like presentation. Likewise, alternate embodiments can combine common content types to generate a desired story. Additionally, it is contemplated that like content (*e.g*., visual) can be combined with other like content (*e.g*., image overlay, transition effects, *etc*.) in accordance with an alternate aspect.

As discussed *supra*, the subject invention discloses compelling new user scenarios that can leverage these novel association features in a portable device (*e*.*g*., smart-phone, PDA). As previously discussed, in an exemplary aspect, the authoring component 106 (FIG. 4) can enable a user to combine various content types. Further, the authoring component 106 can enable a user to combine pictures into a slideshow or project, add voice narration to describe the photos, add background music, pan/zoom effects and transitions to their pictures to create a video "story." The resulting story, in the form of a video file, can be shared with friends and family *via* numerous desired sharing methods (*e.g.,* via email, DVD, VCD, *etc.*).

With reference again to FIG. 3, the authoring component 106 (*e.g.,* association component 302 and binding component 304) can be employed within a portable communication device. The association component 302 of the authoring component 106 can allow a user to view pictures, add voice narration, add text annotations and create an association between these items. Further, in an exemplary aspect, the association component 302 can enable a user to select and sort pictures that were taken and stored on the device 300.

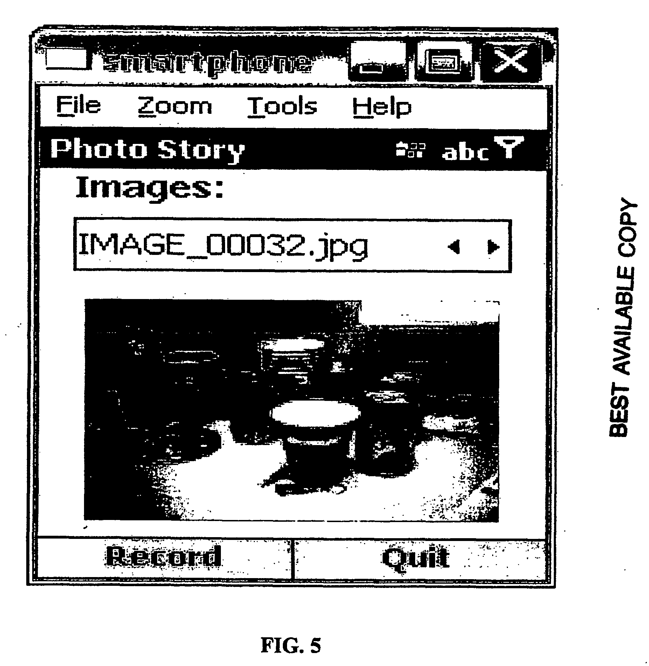

Additionally, the association component 302 can provide the ability to associate recorded voice and/or text notes to each picture. The association component 302 can be configured to store relational data information to track the s photo and associated voice recording and/or text note. As previously noted, this relational data can be of the form of an index file. An exemplary implementation of the association component 302 is discussed with reference to figures 5-8.

As previously discussed with reference to FIG. 2 *supra*, in an exemplary scenario, a user can generate pictures employing the camera component internal to a portable device (*e.g*., cellular phone, PDA). The user can then launch the authoring component 106 to initiate the process of relating voice and/or text comments to desired photos. It is to be appreciated that the content (e.g., visual, audible, text, *etc*.) can be locally or remotely stored, buffered, or cached in any manner known in the art.

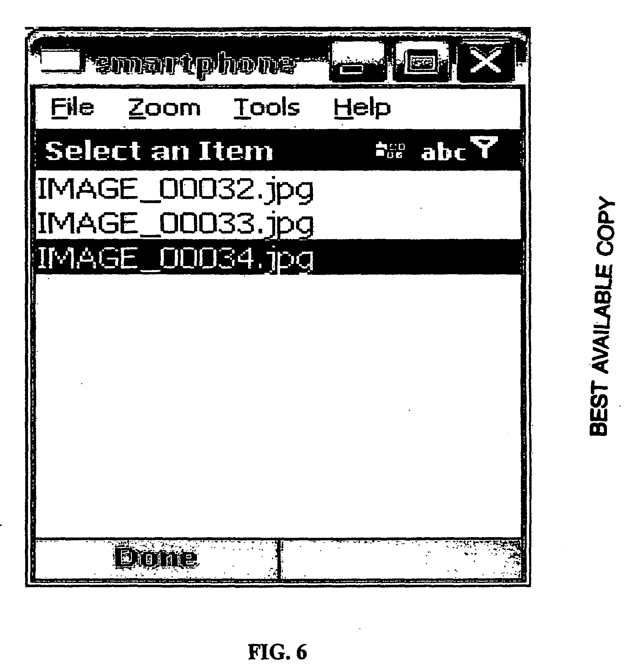

By way of example, upon launch, the authoring component 302 can browse through a default photo folder located in a resident data store of the device. The authoring component 106 can be configured to present a list of all photos in the form of thumbnails or a list to the user. Using a user interface (UI) the user can select images, change order of images, or choose to start adding voice or text annotation for a selected image. FIG. 5 illustrates an exemplary UI for selecting images. As illustrated, the UI can enable the user to traverse through a list of pictures using a thumbnail view. Alternatively, the user can traverse through the pictures using a list view as illustrated in FIG. 6.

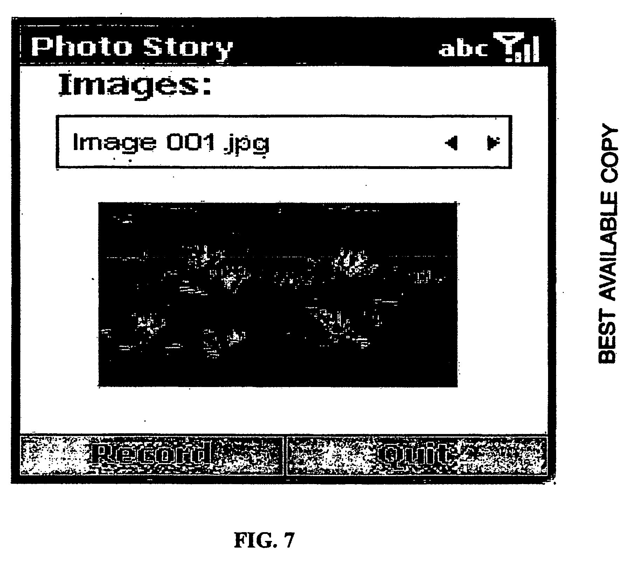

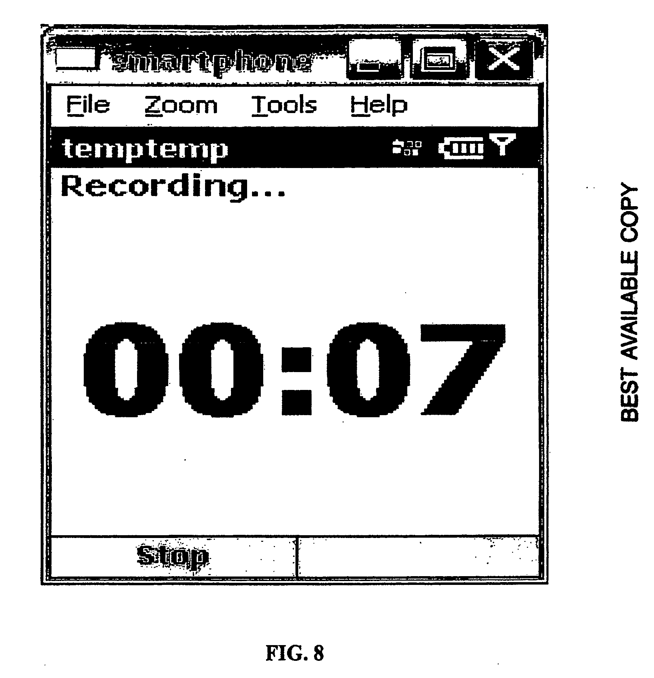

If a user desires to record a voice note, as previously discussed, the system can employ the built-in microphone to effectuate the input of audio content as previously discussed. Additionally, as illustrated in FIG. 7, the UI can be configured with controls to initiate recording. Upon selecting "Record," the UI can be configured to present additional recording options. For example, other options can be presented to permit Start/Pause/Reset recording. In accordance with an alternate UI, upon clicking "Start" recording would be initiated. Likewise, clicking "Pause" would pause recording, and clicking "Reset" would clear the instant recording. FIG. 8 illustrates a timer to indicate an elapsed time of a recording. Additionally, the UI of FIG. 8 includes a "Stop" button to conclude the recording.

Once the acts of association illustrated in figures 5-8 are completed, the authoring component 106 *via* the binding component 304 (FIG. 3) can generate an index file in a resident or remote data store. The index file can contain information to identify which images are associated with specific narration and/or text notes. As well, if applicable, the index file can identify, for each image, which audio file contains the associated narration. Likewise, the index file can identify applicable text comment(s) associated with each image.

In an alternate embodiment, content from multiple portable devices can be combined and to create a common story. By way of example, content from one portable device can be transferred to a second portable device whereby the authoring component of the second device can be employed to integrate the inserted content. It will be appreciated that any method of combining content of multiple devices and or data stores can be employed without departing from the spirit and functionality of the subject invention.

Returning to the example, this relational data index file could be formatted in any known format used in the art including, but not limited to, binary format, text file format or xml format. A sample Extensible Markup Language (XML) formatted data file is shown below:

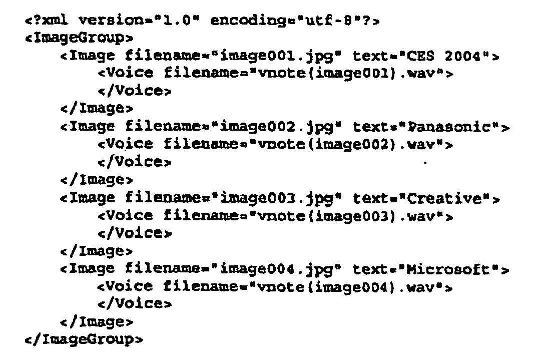

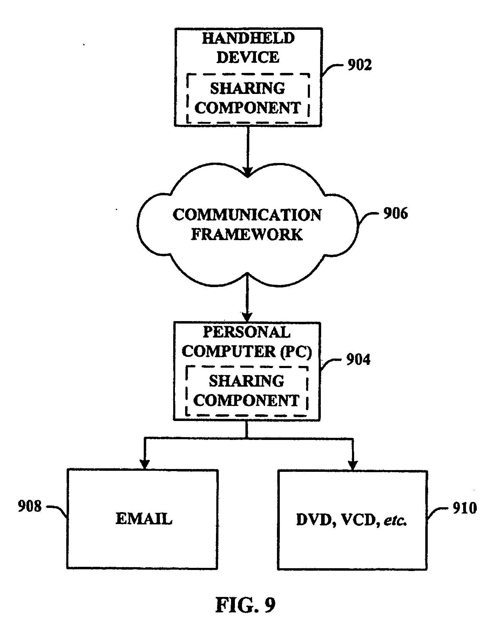

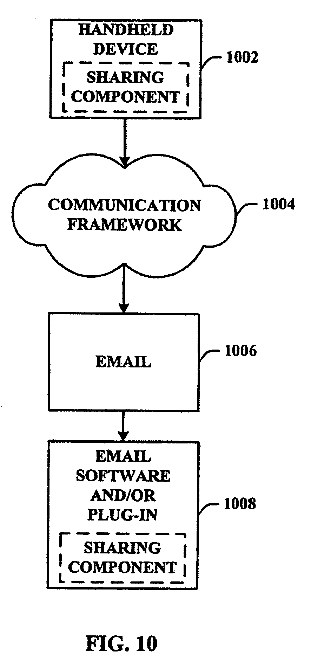

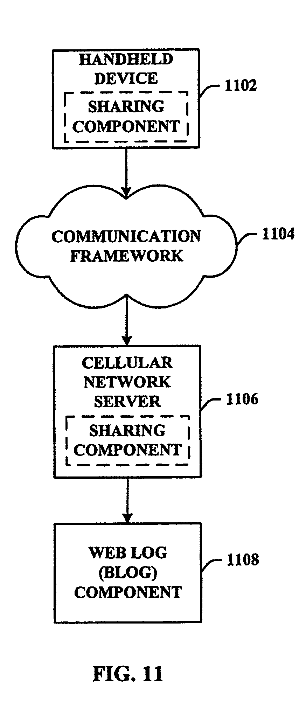

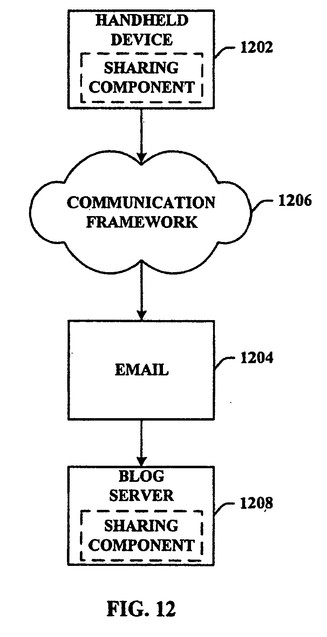

Turning now to another novel aspect of the subject invention, the sharing component 108 (FIG. 3) enables a wide range of possible user scenarios for communicating and sharing an associated index file. By way of example, FIG. 9 illustrates a Phone-to-Connected PC scenario to share a story. Similarly, FIG. 10 illustrates a Phone-to-Email-to-PC scenario. FIG. 11 illustrates yet another aspect of sharing which includes a Phone-to-BLOG scenario. Finally, FIG. 12 illustrates a Phone-to-Email-to-BLOG scenario. Each of these exemplary scenarios will be discussed in further detail *infra.*

As previously discussed, the sharing component can reside on multiple platforms or combinations of platforms (*e.g*., handheld device, PC, server, etc.) By way of example, the sharing component can be resident on a handheld device (*e*.*g*., cellular phone), in a user's home computer (*e*.*g*., PC), or on server maintained in a remote location (*e.g*., cellular network provider). Further, it will be appreciated that the sharing component can be co-located on multiple platforms *(e.g.,* combination handheld, PC and/or server). The sharing module can be designed in accordance with a specific targeted scenario. In an effort to provide context, below is a discussion of three exemplary scenarios in accordance with aspects of the subject invention.

The first scenario is illustrated in FIG. 9. As illustrated, a phone-to-connected PC scenario is shown. Sharing components on a user's handheld device 902 (e.g., smart-phone) can communicate with sharing components running on user's home computer 904 (*e.g*., PC). The network connection can be established *via* communication framework 906. It will be appreciated that any suitable communication framework 906 known in the art can be used including, but not limited to, Bluetooth™ *(e.g.,* wireless), Infra-Red (IR) or USB/Serial cable (*e.g*., wired) connection. These mechanisms of connecting to a PC are available in most portable communication devices (*e.g*., smart-phones) available in the market today. However, it is to be appreciated that new technologies for establishing such connections are possible and can be employed without departing from the scope and functionality of the subject invention.

A sharing component on the user's home computer 904 can access data files (*e.g*., photos, narration, text) on the connected handheld device 902. As well, the association index file can be accessed from the connected handheld device 902. In this case, the sharing component located on the PC 904 can read the data index file on the handheld device 902 that maintains association between images, recorded narration and/or text annotations. The sharing component on the PC 904 can also retrieve the images (*e.g*., photos) and recorded narration files from the handheld device 902 thus binding the content

Subsequently, this information can be passed on to specialty modules on the PC 904 that can present the information to the user in a way such that the user can either view a rich slideshow combining pictures with associated narration and text or the user can perform further editing and author a story-like presentation. The final presentation (*e.g*., slideshow) can then be shared from the PC with friends/family by sending to an email 908, by creating a DVD or VCD 910 using PC hardware/software, or other known sharing techniques available in the art.

FIG. 10 illustrates another exemplary sharing aspect of the subject invention. As previously discussed, many handheld devices (*e.g*., smart-phones) have capability to send emails using over-the-air cellular networks or the like. As illustrated in FIG. 10, handheld device 1002 can be configured to communicate *via* a communication framework or wireless network 1004 *(e.g.,* cellular network). A sharing component on the handheld device 1002 can allow the user to send an email 1006 to an email component 1008 *via* communications network 1004. It will be appreciated that this email 1006 can include, as attachments, visual photos files, narration audio files, annotation text and a data index file that associates pictures, narration and/or annotation as desired. It will also be appreciated that an identifier can be added into the email to prompt the email component 1008 to recognize that the email 1006 was sent by an intelligent handheld device 1002 (*e.g.,* smart-phone) sharing component. By way of example, the title or subject line in the email message can include an identifier or code to prompt the email component 1008 as to the origination of the email 1006.

Furthermore, such an email 1006 can be received by an email component 1008. As illustrated, those skilled in the art will appreciate that plug-ins can be employed with the email application 1008 to automatically detect when a specific type of email is received thus launching appropriate software applications. For example, an email can be sent from a smart-phone sharing component containing visual and audio files together with an association index file as attachments. When the plug-in associated with the email component 1008 detects such an email 1006, it can be configured to automatically read information from the data index file that associates the pictures with narration and/or text.

Upon reading the information, the email client plug-in 1008 can present the information to the user in a form of a rich slideshow by associating the pictures with narration and text. Additionally, the email client plug-in 1008 can automatically combine the pictures, narration and/or text to create a video slideshow that can be presented to the user or saved on the computer for later use. Moreover, the email client plug-in 1008 can launch a specialty PC module whereby the user can edit the contents and create a desired video, presentation or slideshow.

FIG. 11 illustrates another exemplary aspect of a sharing component. This example illustrates a service provided by a cellular network operator to customers. Such cellular operators could provide a service wherein a user could use their handheld device 1102 (*e*.*g*., smart-phone) *via* a communication framework 1104 to upload pictures, narration audio files, annotation notes and an index file associating photos with narration and/or annotation text to a cellular network server 1106 which could post the story on a desired BLOG component 1108. A sharing component running on the servers maintained by the cellular network operators could receive this information and automatically create new entries on the BLOG component 1108 associated to the user.

It will be appreciated that the BLOG component 1108 could be located either on the same or different servers as the cellular network server 1106. Likewise, the BLOG component 1108 can be maintained by the same or different service provider as the cellular network server 1106. In accordance with the subject invention, the new entry created on the BLOG component 1108 could be in the form of a photo slideshow or presentation with narration and pictures. As well, the entry on the BLOG component 1108 can be in the form of a story-like video.

Alternatively, as illustrated in FIG. 12, BLOG operators could provide a service wherein customers, *via* handheld device 1202, could send an email 1204 *via* a communication framework 1206 (*e.g.*, Internet, wireless) directly to a BLOG server 1208. The email 1204 can contain specific attachments in the form of pictures, narration, annotation text and a file associating this information as desired by a user.

When the email 1204 is received by the operator of the BLOG server 1208, a sharing component could be configured to launch automatically thereby adding new entries into the user's BLOG. For example, these entries into a BLOG can be in the form of a photo presentation (*e*.*g*., slideshow) with narration and pictures or of the form of a story-like video. In the email BLOG scenarios, for example, the sharing component *via* a receiving application on a server can automatically detect receipt of an mail generated by the association component (*e.g.*, authoring module), read information from the associated data index file and automatically add new entries into the user's BLOG. This is similar to the plug-in 1008 for an email application running on a PC as shown in FIG. 10 that enables a series of possible methods for automatically generating slideshows and/or presentations.

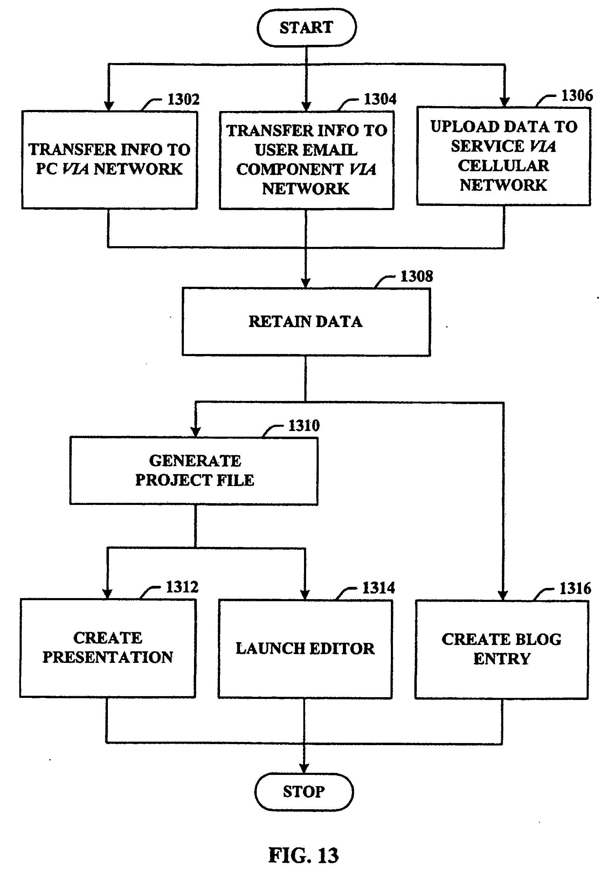

For ease of understanding, FIG. 13 is an exemplary flow chart describing a methodology that can be employed in the operation of the communication and sharing component systems set forth in figures 9-12 discussed *supra.* The methodology shown in FIG. 13 illustrates three exemplary aspects of communicating and/or sharing associated information (*e.g*., video, images, narration, text, index file) from a handheld device to various components.

With reference to FIG. 13 and proceeding to 1302 information (e.g., video, images, narration, text, index files) can be transferred to a PC *via* a communication network *(e.g.,* wired, IR, wireless). In an alternate methodology, as illustrated in 1304, the information can be transferred *via* a communication network *(e.g.,* wired, wireless) to an email component. In yet another aspect, at 1306, the information can be passed from a portable device to a hosted web service (*e.g*., BLOG) *via* a network.

Next, at 1308, the information can optionally be saved. As previously discussed, the content and index file can be retained locally or remotely in any manner known in the art (*e.g*., cache, buffer, data store, etc.) At 1310, a project file can be created. It will be appreciated that the project file can be created manually or automatically through the use of specialty modules as discussed. As well, it will be appreciated that, in an alternate embodiment, the project file can be created prior to transferring or uploading the information.

Continuing with the example, once the project file is generated at 1310, a presentation (*e.g*., slideshow, video story) can be automatically created at 1312 and transferred for viewing. Alternatively, once the project file is generated at 1310, an editor component can be launched at 1314 to permit further editing and authoring of the presentation. For example, the editing component can facilitate a user to modify images (*e.g.,* zoom, contrast, brightness). Furthermore, at 1316, a BLOG entry can be created on a hosted web service.

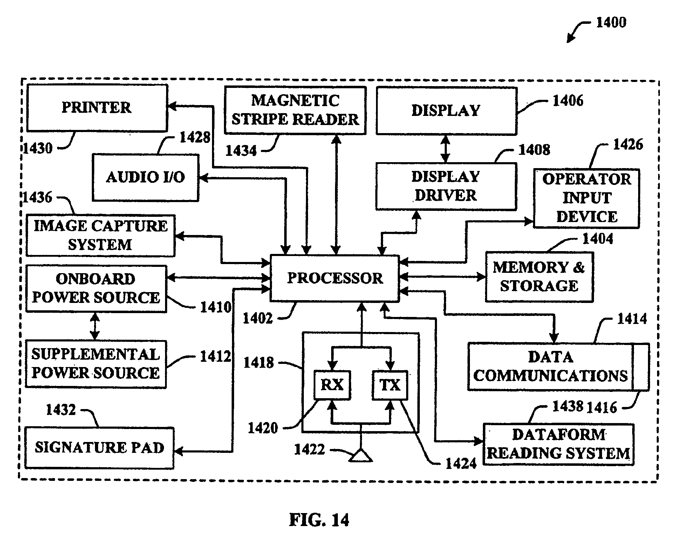

Referring now to FIG. 14, there is illustrated a schematic block diagram of a portable hand-held device 1400 according to one aspect of the subject invention, in which a processor 1402 is responsible for contmlling the general operation of the device 1400. The processor 1402 is programmed to control and operate the various components within the device 1400 in order to carry out the various functions described herein. The processor 1402 can be any of a plurality of suitable processors. The manner in which the processor 1402 can be programmed to carry out the functions relating to the subject invention will be readily apparent to those having ordinary skill in the art based on the description provided herein.

A memory 1404 connected to the processor 1402 serves to store program code executed by the processor 1402, and also serves as a storage means for storing information such as receipt transaction information and the like. The memory 1404 can be a non-volatile memory suitably adapted to store at least a complete set of the information that is displayed. Thus, the memory 1404 can include a RAM or flash memory for high-speed access by the processor 1402 and/or a mass storage memory, e.g., a micro drive capable of storing gigabytes of data that comprises text, images, audio, and video content. According to one aspect, the memory 1404 has sufficient storage capacity to store multiple sets of information, and the processor 1402 could include a program for alternating or cycling between various sets of display information.

A display 1406 is coupled to the processor 1402 *via* a display driver system 1408. The display 1406 can be a color liquid crystal display (LCD), plasma display, or the like. In this example, the display 1406 is a ¼ VGA display with sixteen levels of gray scale. The display 1406 functions to present data, graphics, or other information content. For example, the display 1406 can display a set of customer information, which is displayed to the operator and can be transmitted over a system backbone (not shown). Additionally, the display 1406 can display a variety of functions that control the execution of the device 1400. The display 1406 is capable of displaying both alphanumeric and graphical characters.

Power is provided to the processor 1402 and other components forming the hand-held device 1400 by an onboard power system 1410 (*e.g*., a battery pack). In the event that the power system 1410 fails or becomes disconnected from the device 1400, a supplemental power source 1412 can be employed to provide power to the processor 1402 and to charge the onboard power system 1410. The processor 1402 of the device 1400 induces a sleep mode to reduce the current draw upon detection of an anticipated power failure.

The terminal 1400 includes a communication subsystem 1414 that includes a data communication port 1416, which is employed to interface the processor 1402 with a remote computer. The port 1416 can include at least one of Universal Serial Bus (USB) and IEEE 1394 serial communications capabilities. Other technologies can also be included, for example, infrared (IR) communication utilizing an IR data port.

The device 1400 can also include a radio frequency (RF) transceiver section 1418 in operative communication with the processor 1402. The RF section 1418 includes an RF receiver 1420, which receives RF signals from a remote device *via* an antenna 1422 and demodulates the signal to obtain digital information modulated therein.

The RF section 1418 also includes an RF transmitter 1424 for transmitting information to a remote device, for example, in response to manual user input *via* a user input device 1426 (*e.g*., a keypad) or automatically in response to the completion of a transaction or other predetermined and programmed criteria. The transceiver section 1418 facilitates communication with a transponder system, for example, either passive or active, that is in use with product or item RF tags.

The processor 1402 signals (or pulses) the remote transponder system *via* the transceiver 1418, and detects the return signal in order to read the contents of the tag memory. In one implementation, the RF section 1418 further facilitates telephone communications using the device 1400. In furtherance thereof, an audio I/O section 1428 is provided as controlled by the processor 1402 to process voice input from a microphone (or similar audio input device) and audio output signals (from a speaker or similar audio output device).

In another implementation, the device 1400 can provide voice recognition capabilities such that when the device 1400 is used simply as a voice recorder, the processor 1402 can facilitate high-speed conversion of the voice signals into text content for local editing and review, and/or later download to a remote system, such as a computer word processor. Similarly, the converted voice signals can be used to control the device 1400 instead of using manual entry *via* the keypad 1426. Onboard peripheral devices, such as a printer 1430, signature pad 1432, and a magnetic strip reader 1434 can also be provided within the housing of the device 1400 or accommodated externally through one or more of the external port interfaces 1416.

The device 1400 can also include an image capture system 1436 (*e.g*., camera) such that the user can record images and/or movies for storage by the device 1400 and presentation by the display 1406. Additionally, a dataform reading system 1438 is included for scanning dataforms. It is to be appreciated that these imaging systems (1436 and 1438) can be a single system capable of performing both functions.

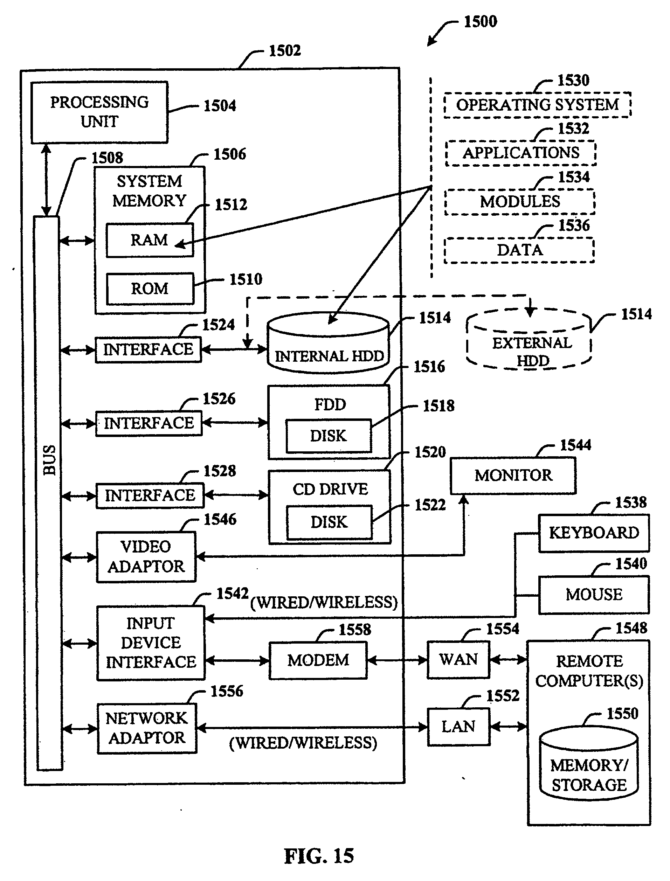

Referring now to FIG. 15, there is illustrated a block diagram of a computer operable to execute the disclosed architecture. In order to provide additional context for various aspects of the subject invention, FIG. 15 and the following discussion are intended to provide a brief, general description of a suitable computing environment 1500 in which the various aspects of the subject invention can be implemented. While the invention has been described above in the general context of computer-executable instructions that may run on one or more computers, those skilled in the art will recognize that the invention also can be implemented in combination with other program modules and/or as a combination of hardware and software.

Generally, program modules include routines, programs, components, data structures, etc., that perform particular tasks or implement particular abstract data types. Moreover, those skilled in the art will appreciate that the inventive methods can be practiced with other computer system configurations, including single-processor or multiprocessor computer systems, minicomputers, mainframe computers, as well as personal computers, hand-held computing devices, microprocessor-based or programmable consumer electronics, and the like, each of which can be operatively coupled to one or more associated devices.

The illustrated aspects of the invention may also be practiced in distributed computing environments where certain tasks are performed by remote processing devices that are linked through a communications network. In a distributed computing environment, program modules can be located in both local and remote memory storage devices.

A computer typically includes a variety of computer-readable media. Computer-readable media can be any available media that can be accessed by the computer and includes both volatile and nonvolatile media, removable and non-removable media. By way of example, and not limitation, computer readable media can comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital video disk (DVD) or other optical disk storage, magnetic cassettes, magnetic tape, magnetic disk storage or other magnetic storage devices, or any other medium which can be used to store the desired information and which can be accessed by the computer.

Communication media typically embodies computer-readable instructions, data structures, program modules or other data in a modulated data signal such as a carrier wave or other transport mechanism, and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer-readable media.

With reference again to FIG. 15, there is illustrated an exemplary environment 1500 for implementing various aspects of the invention that includes a computer 1502, the computer 1502 including a processing unit 1504, a system memory 1506 and a system bus 1508. The system bus 1508 couples system components including, but not limited to, the system memory 1506 to the processing unit 1504. The processing unit 1504 can be any of various commercially available processors. Dual microprocessors and other multi-processor architectures may also be employed as the processing unit 1504.

The system bus 1508 can be any of several types of bus structure that may further interconnect to a memory bus (with or without a memory controller), a peripheral bus, and a local bus using any of a variety of commercially available bus architectures. The system memory 1506 includes read only memory (ROM) 1510 and random access memory (RAM) 1512. A basic input/output system (BIOS) is stored in a non-volatile memory 1510 such as ROM, EPROM, EEPROM, which BIOS contains the basic routines that help to transfer information between elements within the computer 1502, such as during start-up. The RAM 1512 can also include a high-speed RAM such as static RAM for caching data.

The computer 1502 further includes an internal hard disk drive (HDD) 1514 (*e.g.,* EIDE, SATA), which internal hard disk drive 1514 may also be configured for external use in a suitable chassis (not shown), a magnetic floppy disk drive (FDD) 1516, (*e.g*., to read from or write to a removable diskette 1518) and an optical disk drive 1520, (*e.g*., reading a CD-ROM disk 1522 or, to read from or write to other high capacity optical media such as the DVD). The hard disk drive 1514, magnetic disk drive 1516 and optical disk drive 1520 can be connected to the system bus 1508 by a hard disk drive interface 1524, a magnetic disk drive interface 1526 and an optical drive interface 1528, respectively. The interface 1524 for external drive implementations includes at least one or both of Universal Serial Bus (USB) and IEEE 1394 interface technologies.

The drives and their associated computer-readable media provide nonvolatile storage of data, data structures, computer-executable instructions, and so forth. For the computer 1502, the drives and media accommodate the storage of any data in a suitable digital format. Although the description of computer-readable media above refers to a HDD, a removable magnetic diskette, and a removable optical media such as a CD or DVD, it should be appreciated by those skilled in the art that other types of media which are readable by a computer, such as zip drives, magnetic cassettes, flash memory cards, cartridges, and the like, may also be used in the exemplary operating environment, and further, that any such media may contain computer-executable instructions for performing the methods of the subject invention.

A number of program modules can be stored in the drives and RAM 1512, including an operating system 1530, one or more application programs 1532, other program modules 1534 and program data 1536. All or portions of the operating system, applications, modules, and/or data can also be cached in the RAM 1512. It is appreciated that the subject invention can be implemented with various commercially available operating systems or combinations of operating systems.

A user can enter commands and information into the computer 1502 through one or more wired/wireless input devices, *e.g*., a keyboard 1538 and a pointing device, such as a mouse 1540. Other input devices (not shown) may include a microphone, an IR remote control, a joystick, a game pad, a stylus pen, touch screen, or the like. These and other input devices are often connected to the processing unit 1504 through an input device interface 1542 that is coupled to the system bus 1508, but can be connected by other interfaces, such as a parallel port, an IEEE 1394 serial port, a game port, a USB port, an IR interface, etc.

A monitor 1544 or other type of display device is also connected to the system bus 1508 *via* an interface, such as a video adapter 1546. In addition to the monitor 1544, a computer typically includes other peripheral output devices (not shown), such as speakers, printers etc.

The computer 1502 may operate in a networked environment using logical connections *via* wired and/or wireless communications to one or more remote computers, such as a remote computer(s) 1548. The remote computer(s) 1548 can be a workstation, a server computer, a router, a personal computer, portable computer, microprocessor-based entertainment appliance, a peer device or other common network node, and typically includes many or all of the elements described relative to the computer 1502, although, for purposes of brevity, only a memory storage device 1550 is illustrated. The logical connections depicted include wired/wireless connectivity to a local area network (LAN) 1552 and/or larger networks, *e*.*g*., a wide area network (WAN) 1554. Such LAN and WAN networking environments are commonplace in offices, and companies, and facilitate enterprise-wide computer networks, such as intranets, all of which may connect to a global communication network, *e.g*., the Internet.

When used in a LAN networking environment, the computer 1502 is connected to the local network 1552 through a wired and/or wireless communication network interface or adapter 1556. The adaptor 1556 may facilitate wired or wireless communication to the LAN 1552, which may also include a wireless access point disposed thereon for communicating with the wireless adaptor 1556. When used in a WAN networking environment, the computer 1502 can include a modem 1558, or is connected to a communications server on the LAN, or has other means for establishing communications over the WAN 1554, such as by way of the Internet. The modem 1558, which can be internal or external and a wired or wireless device, is connected to the system bus 1508 *via* the serial port interface 1542. In a networked environment, program modules depicted relative to the computer 1502, or portions thereof, can be stored in the remote memory/storage device 1550. It will be appreciated that the network connections shown are exemplary and other means of establishing a communications link between the computers can be used.

The computer 1502 is operable to communicate with any wireless devices or entities operatively disposed in wireless communication, *e.g.,* a printer, scanner, desktop and/or portable computer, portable data assistant, communications satellite, any piece of equipment or location associated with a wirelessly detectable tag (*e.g.*, a kiosk, news stand, restroom), and telephone. This includes at least Wi-Fi and Bluetooth™ wireless technologies. Thus, the communication can be a predefined structure as with conventional network or simply an ad hoc communication between at least two devices.

Wi-Fi, or Wireless Fidelity, allows connection to the Internet from a couch at home, a bed in a hotel room or a conference room at work, without wires. Wi-Fi is a wireless technology like a cell phone that enables such devices, *e.g.,* computers, to send and receive data indoors and out; anywhere within the range of a base station. Wi-Fi networks use radio technologies called IEEE 802.11 (a, b, g, etc.) to provide secure, reliable, fast wireless connectivity. A Wi-Fi network can be used to connect computers and/or handheld devices to each other, to the Internet, and to wired networks (which use IEEE 802.3 or Ethemet). Wi-Fi networks operate in the unlicensed 2.4 and 5 GHz radio bands, at an 11 Mbps (802.1 1a) or 54 Mbps (802.1 1b) data rate, for example, or with products that contain both bands (dual band), so the networks can provide real-world performance similar to the basic 10BaseT wired Ethernet networks used in many offices.

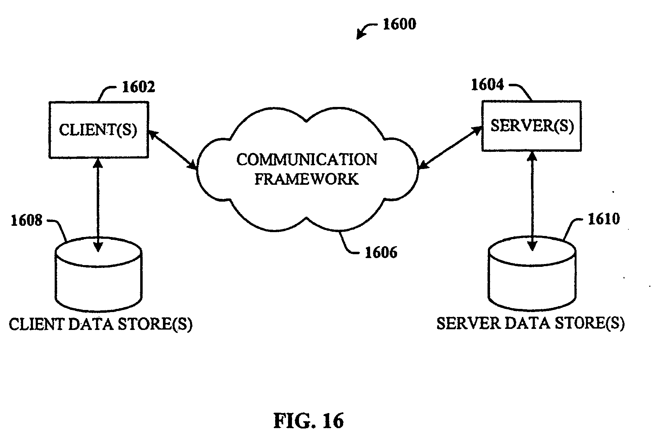

Referring now to FIG. 16, there is illustrated a schematic block diagram of an exemplary computing environment 1600 in accordance with the subject invention. The system 1600 includes one or more client(s) 1602. The client(s) 1602 can be hardware and/or software (*e.g.,* threads, processes, computing devices). The client(s) 1602 can house cookie(s) and/or associated contextual information by employing the subject invention, for example. The system 1600 also includes one or more server(s) 1604. The server(s) 1604 can also be hardware and/or software (*e.g*., threads, processes, computing devices). The servers 1604 can house threads to perform transformations by employing the subject invention, for example. One possible communication between a client 1602 and a server 1604 can be in the form of a data packet adapted to be transmitted between two or more computer processes. The data packet may include a cookie and/or associated contextual information, for example. The system 1600 includes a communication framework 1606 (*e.g*., a global communication network such as the Internet) that can be employed to facilitate communications between the client(s) 1602 and the server(s) 1604.

Communications can be facilitated *via* a wired (including optical fiber) and/or wireless technology. The client(s) 1602 are operatively connected to one or more client data store(s) 1608 that can be employed to store information local to the client(s) 1602 (*e.g*., cookie(s) and/or associated contextual information). Similarly, the server(s) 1604 are operatively connected to one or more server data store(s) 1610 that can be employed to store information local to the servers 1604.

What has been described above includes examples of the subject invention. It is, of course, not possible to describe every conceivable combination of components or methodologies for purposes of describing the subject invention, but one of ordinary skill in the art may recognize that many further combinations and permutations of the subject invention are possible. Accordingly, the subject invention is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A system that facilitates organizing media on a portable communications device, the system comprising;
a video input component that receives visual content; and
an authoring component that associates other content with a subset of the visual content.

2. The system of claim 1, wherein the portable communications device is a cellular telephone that comprises at least one of a camera and an audio input component.

3. The system of claim 1, further comprising an audio input component that receives audio content, wherein the authoring component associates the audio content with the subset of the visual content.

4. The system of claim 1, further comprising a text input component that receives text data, wherein the authoring component associates the text data with the subset of the visual content.

5. The system of claim 1, further comprising a binding component that combines the subset of visual content with the other content to generate a compilation.

6. The system of claim 5, wherein the binding component provides for concurrently receiving the visual content and other content and automatically generates the compilation.

7. The system of claim 5, further comprising a display component that facilitates presentation of the compilation.

8. The system of claim 5, further comprising a sharing component that facilitates distribution of the compilation.

9. The system of claim 1, further comprising a sharing component that facilitates distribution of the associated content.

10. An email system that receives the associated subset of visual content and the other content of the system of claim 9 and generates a compilation of the received content.

11. The system of claim 10, wherein the compilation is a slideshow.

12. The system of claim 10, wherein the compilation is an annotated video.

13. The system of claim 9, further comprising a computer that receives the associated subset of visual content and the other content and generates a compilation of the received content.

14. The system of claim 1, further comprising an association component that facilitates a user to select the subset of visual content.

15. A computer that receives the associated subset of visual content and the other content of the system of claim 9, and generates a compilation of the received content.

16. The system of claim 9, wherein the sharing component facilitates the entry of the associated subset of visual content into a web log (BLOG).

17. The system of claim 1, further comprising a collaboration component that combines the associated subset of visual content with a second associated subset of visual content of a second portable communication device.

18. A computer readable medium having stored thereon computer executable instructions for carrying out the system of claim 1.

19. The system of claim 1, further comprising an artificial intelligence component that learns a user's intention as a function of a historical user criteria.

20. The system of claim 19, the artificial intelligence component including an inference component that facilitates automatic association of content as a function of the user's intention.

21. The system of claim 20, the inference component employing a utility-based analyses in performing the association.

22. The system of claim 1, further comprising an intelligence component that employs a statistical-based analysis to infer an action that a user desires to be automatically performed.

23. A system that facilitates generation of a multimedia presentation, the system comprising:
a handheld device comprising an image capture component that generates visual content and a microphone that generates audio content;
a visual input component that receives the visual content, the visual content comprising one or more images;
an audio input component that receives the audio content, the audio content comprising one or more sounds; and
an authoring component that combines at least one image with at least one sound to generate the multimedia presentation.

24. The system of claim 23, wherein the handheld device is a mobile telephone.

25. The system of claim 23, further comprising a sharing component to communicate the multimedia presentation to a party.

26. The system of claim 23, further comprising a display component that displays the multimedia presentation.

27. The system of claim 23, further comprising a text input component that facilitates an input of text data corresponding to at least one image or video and wherein the authoring component combines the text data with the at least one image or video.

28. A computer readable medium having stored thereon computer executable instructions for carrying out the system of claim 25.

29. A method that facilitates organizing media *via* a portable communication device, the method comprising.
receiving visual content;
receiving other content; and
associating the visual content with the other content.

30. The method of claim 29, wherein the other content is audio content.

31. The method of claim 29, wherein the other content is text data.

32. The method of claim 29, further comprising binding the associated content to generate a compilation.

33. The method of claim 29, further comprising receiving the associated content and generating a compilation from the associated content.

34. The method of claim 33, further comprising displaying the compilation.

35. The method of claim 29, further comprising receiving the associated content *via* email and generating a compilation of the associated content.

36. The method of claim 29, further comprising entering the associated content into a web log.

37. A system for creating a compilation of visual content and other content *via* a portable handheld device, the system comprising:
means for receiving the visual content;
means for receiving the other content; and
means for associating the visual content with the other content.

38. The system of claim 37, further comprising means for binding the associated content to generate a compilation.

39. The system of claim 38, further comprising means for displaying the compilation.

40. The system of claim 38, further comprising means for posting the compilation on a BLOG.

41. The system of claim 38, further comprising means for communicating the compilation to an email server and means for automatically interpreting the compilation.

42. The system of claim 38, further comprising means for receiving a subset of other content from an alternate source.

43. The system of claim 42, wherein the alternate source is a second portable communications device.

44. The system of claim 42, further comprising means for combining the subset of other content from an alternate source with the associated content.
